(19) Europäisches Patentamt
European Patent Office
Office européen des brevets

(11) EP 4 549 908 A1

(12) EUROPEAN PATENT APPLICATION
published in accordance with Art. 153(4) EPC

(43) Date of publication:
07.05.2025 Bulletin 2025/19

(51) International Patent Classification (IPC):
G01N 13/00 (2006.01)

(21) Application number: 23863136.0

(52) Cooperative Patent Classification (CPC):
G01N 13/00

(22) Date of filing: 04.09.2023

(86) International application number:
PCT/JP2023/032209

(87) International publication number:
WO 2024/053598 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.09.2022 JP 2022141234

(71) Applicant: JFE Steel Corporation
Tokyo 100-0011 (JP)

(72) Inventors:
• KOBA, Masaki
  Tokyo 100-0011 (JP)
• HOSHINO, Katsuya
  Tokyo 100-0011 (JP)
• OKUMURA, Yusuke
  Tokyo 100-0011 (JP)

(74) Representative: Grünecker Patent- und
Rechtsanwälte
PartG mbB
Leopoldstraße 4
80802 München (DE)

(54) **METHOD FOR EVALUATING WETTABILITY OF SOLID SURFACES**

(57) Provided is a simpler technique for quantitatively determining the surface wettability of solids by any liquid.

A solid surface wettability evaluation method includes: performing an immersion test in which a test material is prepared by placing two solids opposite to each other such that evaluation target surfaces of the solids are separated from each other and at least entire lower ends of the two solids are present on the same plane, and the test material is immersed in an evaluation liquid such that an entire lower end of the test material is parallel to a surface of the evaluation liquid; measuring, as a wetting height, a difference between a height of the surface of the evaluation liquid and a height of a liquid surface of the evaluation liquid flowing into a gap between the two solids at a predetermined immersion time; and using the measured value as a value for evaluating wettability of surfaces of the solids by the evaluation liquid.

FIG. 1

1. SOLID
2. SPACER
3. GAP WIDTH

Processed by Luminess, 75001 PARIS (FR)

## Description

Technical Field

The present invention relates to a solid surface wettability evaluation technique for more simply and quantitatively evaluating wettability of a solid surface by various liquids in a given atmosphere above the liquid surface.

Background Art

In general, the wettability of a solid by a liquid is evaluated on the basis of the contact angle. The contact angle is the angle on the liquid side between the tangent line to the liquid and the solid surface at the contact point of three phases of solid, liquid, and gas. The contact angle of a liquid with a solid is usually measured by using, for example, the sessile drop method as described in Non Patent Literature 1. This method includes two methods: one method is to directly measure the contact angle, and the other is to capture the contour of a droplet and measure the angle by image analysis. In fact, Non Patent Literature 3 describes a method for evaluating the static wettability of various oxides by molten Zn-Al solutions using a static method.

Other wettability evaluation techniques include wettability evaluation using the meniscograph method. As described in Non Patent Literature 2, the meniscograph method involves measuring changes in force acting on a sample over time while the sample is immersed in a liquid. The force (equilibrium wetting load) when the force acting on the sample becomes constant to some extent is measured, which is useful in evaluating, for example, solderability.

Patent Literature 1 proposes a simpler technique for evaluating the wettability of a solid by a liquid. Specifically, two evaluation target solids are placed opposite to each other to produce a V-shaped body. The V-shaped body is immersed in an evaluation liquid, and an increase in the height of the liquid along the wall surface from the liquid surface is measured. The measured value is used to evaluate the wettability of the evaluation target solids by the target liquid.

Citation List

Non Patent Literature

NPL 1: Syu ONO, "Surface Tension", Kyoritsu Shuppan, 1980, p.82
NPL 2: Sadayuki TOMA, "Evaluation of Solderability by Meniscograph", Journal of the Surface Finishing Society of Japan, 2012, Vol. 63, No. 11, p. 660
NPL 3: YUNKYUM KIM "Wettability of MnxSiyOz by Liquid Zn-Al Alloys", METALLURGICAL MATERIALS TRANSACTIONS B, 2010, Vol. 14B, p. 872

Patent Literature

PTL 1: Japanese Unexamined Patent Application Publication No. 06-148056

Summary of Invention

Technical Problem

The method described in Non Patent Literature 1 includes two methods: one method is to directly measure the contact angle, and the other is to capture the contour of a droplet and measure the angle by image analysis. The former method, however, has issues with precision due to subjective judgment, whereas the latter method has issues associated with complicated operations. These methods also have the disadvantage that the measurement error increases with increasing contact angle. Furthermore, these techniques are designed for measurement at room temperature and difficult to use for easily oxidizable molten materials with high temperature.

In Non Patent Literature 3, the wettability of a given steel sheet by high-temperature molten zinc is evaluated by setting a stage for the droplet test in a chamber in which high temperature-reduction annealing can be performed. This type of evaluation method, however, evaluates only the wettability of a steel sheet by a very small amount of liquid and significantly differs from, for example, the actual process of continuously immersing a steel sheet in a liquid, such as a hot-dip galvanization line.

The meniscograph method described in Non Patent Literature 2 involves immersing a sample in a liquid and enables wettability evaluation similar to the actual process. This method requires measuring minute changes in force acting on a sample over time when the sample is immersed in a liquid and thus requires, in addition to high precision as in the above process, high-precision load measuring equipment for measurement and skill.

Patent Literature 1 proposes a simpler technique for evaluating the wettability of a solid by a liquid. Specifically, two evaluation target solids are placed opposite to each other to produce a V-shaped body. The V-shaped body is immersed in an evaluation liquid, and the increase in the height of the liquid along the wall surface from the liquid surface is measured. The measured value is used to evaluate the wettability of the evaluation target solids by the target liquid. To compare the numerical values described in Patent Literature 1, however, only the evaluation target must be changed under the same conditions. Specifically, only the target condition selected from evaluation liquid, liquid temperature, test specimen size, immersion speed, immersion depth, is changed to conduct a relative comparison. It is thus difficult to measure absolute parameters, such as wetting contact angle. It is further difficult to measure the wettability by high-temperature molten materials, such as molten metal coating, because of limitations in the evaluation technique.

The present invention is directed to a method for quantitatively evaluating the wettability of a solid surface by a liquid with high precision without the need of load measuring equipment.

The present invention is further directed to a solid surface wettability evaluation method in which the conditions of an environmental atmosphere to which a solid surface above an evaluation liquid surface is exposed can be set.

Solution to Problem

The inventors of the present invention have carried out intensive studies to solve the above issues and, as a result, have found that a pair of solids having evaluation surfaces facing each other at a certain distance are horizontally immersed in an evaluation liquid, and the difference in height between the surface of the evaluation liquid and the surface of the liquid flowing into a gap between the pair of solids is measured as a wetting height, and the surface wettability of the solids by the evaluation liquid can be evaluated on the basis of this measured value. According to the method of the present invention, the wettability of a solid surface by a liquid can be evaluated with high precision without using load measuring equipment for wettability evaluation.

The present invention is particularly suitable for evaluating the wettability of a solid surface by a molten metal with high precision under controlled atmosphere conditions.

The present invention has been accomplished on the basis of the above finding. The gist of the present invention is as described below.

[1] A solid surface wettability evaluation method including: performing an immersion test in which a test material is prepared by placing two solids opposite to each other such that evaluation target surfaces of the solids are separated from each other and entire lower ends of the two solids are present on a same plane, and the test material is immersed in an evaluation liquid such that an entire lower end of the test material is parallel to a surface of the evaluation liquid; measuring, as a wetting height, a difference between a height of the surface of the evaluation liquid and a height of a liquid surface of the evaluation liquid flowing into a gap between the two solids at a predetermined immersion time; and using the measured value as a value for evaluating wettability of surfaces of the solids by the evaluation liquid.

[2] The solid surface wettability evaluation method according to [1], wherein a contact angle of the evaluation liquid with the solids is calculated on the basis of the wetting height and a gap width between the solids, and the contact angle is used as a value for evaluating the wettability of the surfaces of the solids by the evaluation liquid.

[3] The solid surface wettability evaluation method according to [1] or [2], wherein a gap width $w_{after\ test}$ between the solids after the immersion test is measured, the wetting height h is corrected by using formula (1) below on the basis of the gap width $w_{after\ test}$ and a gap width $w_{before\ test}$ between the solids before the immersion test, and a wetting height $h_{after\ correction}$ after the correction is used as a value for evaluating the wettability of the surfaces of the solids by the evaluation liquid.

$$h_{after\ correction} = (h \cdot w_{after\ test})/w_{before\ test} \quad (1)$$

[4] The solid surface wettability evaluation method according to [3], wherein the contact angle of the evaluation liquid with the solids is calculated from the wetting height $h_{after\ correction}$ after the correction and the gap width $w_{after\ test}$ between the solids after the immersion test, and the contact angle is used as a value for evaluating the wettability of the surfaces of the solids by the evaluation liquid.

[5] The solid surface wettability evaluation method according to any one of [1], [2], [3] and [4], wherein a wet spreading speed at a solid-liquid interface is calculated from a change in the height of the liquid surface of the evaluation liquid flowing into the gap between the solids when the immersion time is changed in the immersion test.

[6] The solid surface wettability evaluation method according to any one of [1], [2], [3], [4] and [5], wherein an atmosphere above the surface of the evaluation liquid during immersion or before immersion in the immersion test is controlled.

[7] The solid surface wettability evaluation method according to [6], wherein the evaluation liquid is a molten metal.

[8] The solid surface wettability evaluation method according to [7], wherein the evaluation liquid is a molten zinc.

Advantageous Effects of Invention

According to the present invention, the wettability of a solid surface by a liquid can be evaluated with high precision without the need of load measuring equipment. It is also possible to calculate the wet spreading speed at the solid-liquid interface and set the conditions of an environmental atmosphere to which the surface of a liquid to be measured is exposed. As a specific application, the wettability of a solid surface by a high-temperature liquid can be measured simply and quantitatively.

Brief Description of Drawings

[Fig. 1] Fig. 1 is a schematic view of a test material for surface wettability evaluation according to the present invention.

[Fig. 2] Fig. 2 is a schematic cross-sectional view of the test material for surface wettability evaluation according to the present invention in the direction perpendicular to the evaluation surface when the test material is immersed in an evaluation liquid.

[Fig. 3] Fig. 3 illustrates the meniscograph method described in Non Patent Literature 2.

[Fig. 4] Fig. 4 is a schematic view of wetting-up for good liquid surface wetting.

[Fig. 5] Fig. 5 is a top view of the test material for surface wettability evaluation when the solids swell with heating.

[Fig. 6] Fig. 6 is a cross-sectional view taken along line A-A' in Fig. 5.

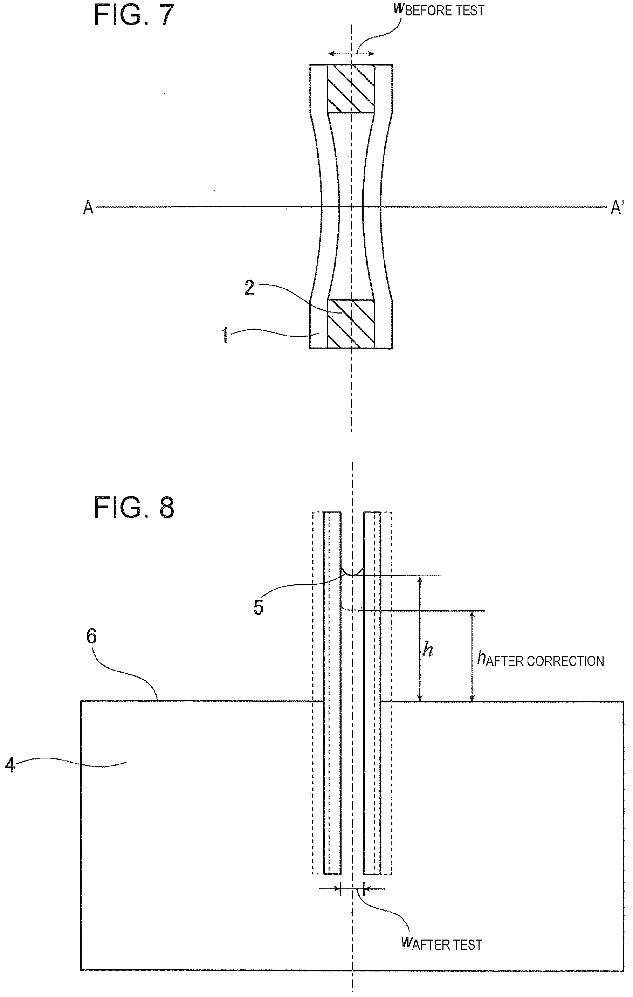

[Fig. 7] Fig. 7 is a top view of the test material for surface wettability evaluation when the solids contract with heating.

[Fig. 8] Fig. 8 is a cross-sectional view taken along line A-A' in Fig. 7.

Description of Embodiments

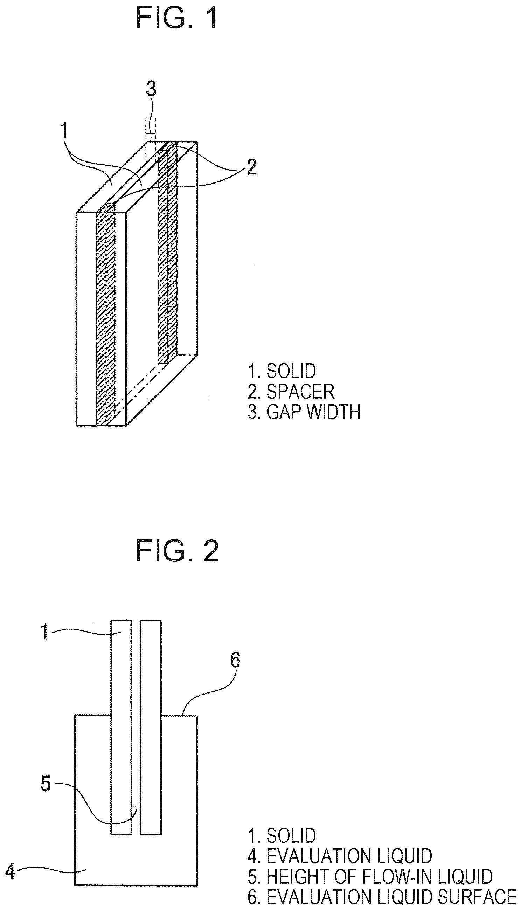

The technique of the present invention is schematically illustrated in Figs. 1 and 2. Referring to Fig. 1, a test material is first prepared by fixing two solids in a pair, or a pair of solids, such that the evaluation target surfaces of the solids face each other with spacers therebetween. The opposed solids and the spacers are fixed as necessary. The evaluation target surfaces may have curvature but are preferably flat in order to improve measurement precision. The solids are preferably plate-like members having a flat shape.

The method for fixing the two solids is not limited, and the two solids may be fixed by welding, screwing, or other methods. The spacers may be made of the same material as the solids, or may be made of a glass plate or other materials to allow internal visualization. To evaluate surface wettability, two solids need to be placed such that at least the entire lower ends of the two solids are present on a same plane. The test material is then immersed in an evaluation liquid such that an entire lower end of the test material is parallel to a surface of the evaluation liquid, a difference in height between the evaluation liquid surface and the flow-in liquid is measured, and the measured value is used as a value for evaluating wettability.

The size of the solids is determined according to, for example, the size of the test material that can be sampled and the amount of the evaluation liquid in which the test material is to be immersed, but the height of the solids (in the direction perpendicular to the evaluation liquid surface) is preferably 10 to 1000 mm in order to measure the difference in height between the evaluation liquid surface and the flow-in liquid. The height of the solids is more preferably 50 mm or more. The height of the solids is more preferably 200 mm or less. The width of the solids (corresponding to the distance between the spacers) is preferably from 10 to 1000 mm. The width of the solids is more preferably 30 mm or more. The width of the solids is more preferably 150 mm or less.

The gap width between the solids is preferably 2 mm or less in order to make clear differences in flow-in liquid height resulting from differences in wettability. The gap width between the solids is more preferably 1.5 mm or less. When the gap width is too narrow, the solid shape may have a large effect, which may impair precision. The gap width is thus preferably 0.2 mm or more.

Next, the underlying findings leading to the wettability evaluation method of the present invention will be described. The applicability of contact angle measurement as a wettability evaluation method is well known, but as described above, it is not easy to measure the contact angle. For this, the inventors of the present invention have focused on the "capillary action" as a phenomenon that enables wettability evaluation. The capillary action is a physical phenomenon in which liquid inside a narrow tube flows up inside the tube. The contact angle can be calculated on the basis of the following formula from the height h of the liquid surface inside the tube when the narrow tube is immersed in an evaluation liquid.

$$h = \{2\gamma\cos\theta/(\rho g r)\} \times 10^6 \quad (2)$$

wherein h: the height (mm) of the liquid surface, $\gamma$: the surface tension (N/m), $\theta$: the contact angle (°), $\rho$: the density (kg/m$^3$) of the evaluation liquid, g: the gravitational acceleration (m/sec$^2$), r: the inner diameter (mm) of the narrow tube.

The calculation of the height of the liquid surface is, however, limited to solids that can be formed into tubular shapes. Therefore, there has been an issue in which high strength steel sheets or other materials that are difficult to process into tubular shapes cannot be used as solids for wettability evaluation.

The inventors of the present invention have studied whether the height of the liquid surface can be evaluated by using a simpler and more practical technique, and have found that a test material with a small gap width, which is the distance between solids as illustrated in Fig. 1, shows a similar "capillary action."

The high strength steel sheet described herein has, for example, a steel composition containing, by mass%, C: 0.0001% or more and 0.30% or less, Si: 0.001% or more and less than 2.0%, Mn: 0.01% or more and 3.5% or less, P: 0.02% or less, S: 0.01% or less, Al: 0.10% or less, N: 0.006% or less, and further containing at least one of Nb: 0.005 to 1%, Ti: 0.005 to 1%, V: 0.005 to 1%, Zr: 0.005 to 1%, Cr: 0.005 to 20%, Ni: 0.005 to 10%, Co: 0.005 to 1%, Mo: 0.005 to 1%, W: 0.005 to 1%, Ca: 0.0001 to 0.01%, Mg: 0.0001 to 0,01%, REM: 0.0001 to 0,01%, Sn: 0.001 to 0.2%, Sb: 0.001 to 0.2%, and B: 0.0001 to 0.01%, with the balance being Fe and incidental impurities. The steel sheet preferably has a tensile strength TS of 270 MPa or higher.

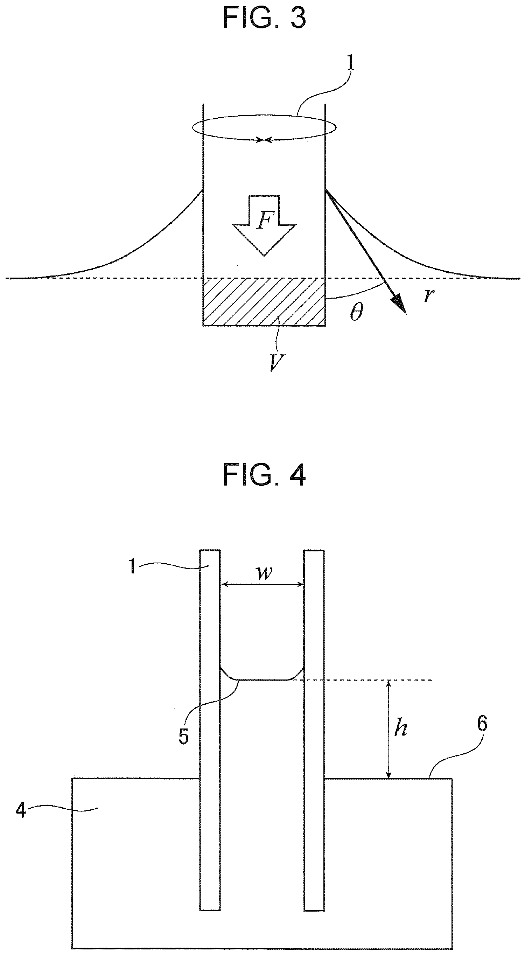

The force balance when the test material is immersed is used in the meniscograph method (Fig. 3) described in Non Patent Literature 2, and the following formula holds.

$$F = \gamma\cos\theta \cdot l \times 10^{-3} - V\rho g \times 10^{-9} \quad (3)$$

wherein F: the force (N) in the vertical direction, $\gamma$: the surface tension (N/m), $\theta$: the contact angle (°), l: the perimeter (mm) of the evaluation target solid, V: the volume (mm$^3$) of the immersed portion, $\rho$: the density (kg/m$^3$) of the evaluation liquid, g: the gravitational acceleration (m/sec$^2$). On the basis of this formula, the relationship between the height of the liquid surface and the contact angle when using the test material of the present invention will be described.

Fig. 4 is a schematic view of wetting-up for good liquid surface wetting. The "wetting-up" refers to the phenomenon in which the evaluation liquid wets the surface of the gap area between the solids and flows up along the surface of the gap area.

In Fig. 4, the height of the flow-in liquid surface from the evaluation liquid surface is represented by h (mm), and the gap width is represented by w (mm). The height h (mm) of the flow-in liquid surface from the evaluation liquid surface refers to the difference in height between the surface of the evaluation liquid and the liquid surface of the evaluation liquid flowing into the gap between two solids in the technique of the present invention where two solids are placed opposite to each other. Hereinafter, the height h of the flow-in liquid surface from the evaluation liquid surface may be referred to as wetting height. When the liquid surface stops moving, the surface tension of the evaluation liquid caused by wettability is balanced with the mass of the evaluation liquid in the gap, so that

$$\gamma\cos\theta \cdot l = V\rho g \times 10^{-6} \quad (4).$$

Assuming that the length between the spacers in Fig. 1 is L (mm), the above formula can be transformed as follows. In this case, the length L between the spacers is assumed to be much larger than the gap width w.

$$\gamma\cos\theta \cdot (2L) = (w \cdot h \cdot L)\rho g \times 10^{-6} \quad (5)$$

$$\cos\theta = (wh\rho g \times 10^{-6})/(2\gamma) \quad (6)$$

$$\theta = \arccos\{(wh\rho g \times 10^{-6})/(2\gamma)\} \quad (7)$$

In other words, using the method of the present invention, the contact angle $\theta$ can be calculated by measuring the wetting height h at a predetermined plate width, whereby the wettability can be evaluated quantitatively. Using the method of the present invention, the wetting height h between two solids is measured, and the measured value can be used as a value for measuring the wettability of the surfaces of the solids by the evaluation liquid. According to the method of the present invention, the wettability of a solid surface by a liquid can be evaluated with high precision without using load measuring equipment. In the evaluation of wettability according to the method of the present invention, the wettability of different samples can be relatively compared and evaluated by setting the solid immersion time to a specific time. The immersion time in this case may be changed according to the purpose.

An evaluation device used in the wettability evaluation method according to the present invention is very simple as illustrated in Fig. 1. The evaluation device is placed in a sealed device containing a controllable environmental atmosphere, and device materials that can be used under the environmental atmosphere are selected, whereby the wettability of a solid surface by a liquid in a high-temperature environment or a corrosive environment can be evaluated with high precision.

In general, it is not easy to use load measuring equipment in a high-temperature environment or a corrosive environment. High temperature refers to temperatures of 100°C or higher and 2000°C or lower. The method of the present invention is suitable for evaluating the wettability of a solid surface by a molten metal since the method of the present invention enables wettability measurement even when the evaluation liquid has a high temperature. In particular, when the evaluation liquid is a high-temperature molten material for metal coating, which requires highly precise evaluation of liquid wettability of a solid surface from an industrial standpoint, the evaluation liquid typically has a temperature of 100°C or higher and 700°C or lower. The wettability evaluation method according to the present invention is particularly suitable for evaluating the wettability of a solid surface using, as an evaluation liquid, molten zinc, which typically has a melting point of 400°C or higher in a metal coating process.

When the two solids are identical, the calculated contact angle indicates the wettability of the solids, but when the two solids are made of different materials, the calculated angle is the average of the different contact angles with the two solids. The wetting height h is as follows.

$$h = \{\gamma(\cos\theta_{solid\ 1}+\cos\theta_{solid\ 2})/(\rho gr)\} \times 10^6 \quad (8)$$

Therefore, the wettability evaluation method of the present invention can also be used to measure the contact angle of an evaluation liquid in a structure composed of two solids made of different materials.

In addition, the immersion can be carried out in a sealed device with a controlled atmosphere in the wettability evaluation method of the present invention, so that the wettability of a solid surface by a liquid under various environmental atmospheres can be evaluated with high precision. For hot-dip galvanization, which is a case where the high-temperature molten material for metal coating is used as the evaluation liquid, examples of the elements of a typical atmosphere include hydrogen concentration, oxygen concentration, carbon monoxide concentration, carbon dioxide concentration, and dew point used as an indicator for water vapor concentration. The effect of a gas atmosphere in which these elements are controlled on wettability can also be evaluated.

Examples of inert gases in the remainder in the atmosphere in which the above elements are controlled include nitrogen, argon, and helium. The present invention has the following features: a chemical reaction, such as oxidation reaction, between a solid and an atmospheric gas can be induced in a sealed device with a controlled atmosphere so that the solid surface is partially or completely coated with the reaction product generated by the reaction, and in this state, the wettability of the solid surface by a liquid can be evaluated. For example, the wettability of an oxide-coated steel sheet by a coating liquid can be evaluated by holding a sample made of a steel sheet in a gas atmosphere controlled to a predetermined atmosphere for a predetermined time to oxidize the surface of the steel sheet, and then immersing the oxide-coated sample in a high-temperature molten metal for coating without exposing the sample to the outside air. In other words, the wettability, by the evaluation liquid, of the solids coated with the reaction product at a certain coverage can be evaluated in the present invention.

Continuously carrying out the chemical reaction and the wettability evaluation in a box has the following advantage: it can prevent or reduce, for example, changes in crystal structure and changes in the adhesion state of the reaction product caused by cooling to room temperature, as well as oxidation caused by contact with the outside air, which allows wettability evaluation with high precision. Such evaluation enables understanding of the effect of the gas atmosphere composition on the wettability of the solids by the evaluation liquid. Therefore, at least one of the temperature, the hydrogen concentration, the oxygen concentration, the carbon monoxide concentration, the carbon dioxide concentration, and the dew point of the atmosphere above the evaluation liquid surface when or before the solids are immersed in the evaluation liquid is preferably controlled in the present invention.

The method of the present invention is suitable for wettability evaluation for materials that are difficult to shape, such as high strength steel sheets, because there is no need to shape test materials into, for example, cylindrical shapes.

In general, a very small amount of the evaluation liquid may change in chemical composition when reacting with the solid surface, or may significantly change in temperature when being affected by the temperature of the solids. According to the wettability evaluation method of the present invention, the wettability of the solid surfaces by the evaluation liquid can be evaluated by immersing the sample in the evaluation liquid. More specifically, the change in the composition of the evaluation liquid and the change in the temperature of the evaluation liquid can be reduced to negligible levels when the sample is immersed in the evaluation liquid, and the wettability can also be precisely measured with small changes in the composition and temperature of the evaluation liquid.

For example, when a molten zinc bath is used as an evaluation liquid, and a steel sheet is used as solids, Al in the hot-dip galvanizing bath liquid used as the evaluation liquid reacts with trace amounts of oxides in the solid steel sheet surface to reduce the oxides. Therefore, when a very small amount of droplet is used as an evaluation liquid, the proportion of Al consumed in the droplet may increase so that Al in the droplet may disappear, and the reduction of the oxides in the steel sheet surface may be insufficient. When the temperature of the droplet differs from the temperature of the steel sheet after a very small amount of the droplet is dropped, the temperature change after the droplet is dropped increases with decreasing volume of the droplet. The obtained results differ in chemical composition and temperature from those obtained assuming that the sample is immersed in the evaluation liquid as in the present invention. Since the sample is immersed in the evaluation liquid according to the wettability evaluation method of the present invention, the changes in the composition and temperature of the evaluation liquid can be reduced to negligible levels, and the wettability of the solid surface by the evaluation liquid can also be precisely measured with small changes in the composition and temperature of the evaluation liquid.

In the wettability evaluation method of the present invention, the volume of the evaluation liquid in its liquid state is preferably set appropriately according to a production method assumed for wettability evaluation.

To reduce the effect of the compositional change and the temperature change of the evaluation liquid in its liquid state, the volume of the evaluation liquid in its liquid state is preferably $0.8 \text{ mm}^3$ or more, more preferably $1.2 \text{ mm}^3$ or more per $1 \text{ mm}^2$ on one side (per $2 \text{ mm}^2$ on both sides) of the evaluation area of the solids.

In the wettability evaluation in the present invention, the immersion depth of the solids in the evaluation liquid is preferably 60 mm or less. In the present invention, the wettability is calculated from the difference between the height to which the evaluation liquid wets up and the bath liquid surface, and thus the result of wettability calculation is not affected by the immersion depth of the solids. When the immersion depth of the solids in the evaluation liquid is 60 mm or less, the elements consumed in the reaction between the evaluation liquid and the solids are immediately replenished through an evaluation liquid flow-in port at the lower ends of the solids to prevent or reduce a change in the chemical composition of the evaluation liquid that has flown into the gap between the solids. To prevent or reduce a change in chemical composition caused by the chemical reaction between the solids and the evaluation liquid, the immersion depth of the solids in the evaluation liquid is more preferably 50 mm or less. To sufficiently replenish the consumed elements in the evaluation liquid, the volume of the evaluation liquid in its liquid state is preferably $5 \text{ mm}^3$ or more per $1 \text{ mm}^2$ on one side (per $2 \text{ mm}^2$ on both sides) of the solid area.

Unlike a conventional method based on measurement at room temperature as in Patent Literature 1, the evaluation technique of the present invention is particularly useful in evaluation for high-temperature molten metals or other materials that may cause the solids to change in shape with heating or cooling. By measuring $w_{\text{before test}}$ and $w_{\text{after test}}$, which are the gap widths between the solids before and after the immersion test, the wetting height is corrected on the basis of the following formula, which allows more precise wettability evaluation.

$$h_{\text{after correction}} = (h \cdot w_{\text{after test}})/w_{\text{before test}} \quad (1)$$

The case where the solids change in shape includes cases where the solids change in shape irregularly as the solids bend or warp. In such a case, the gap width $w_{\text{after test}}$ between the solids after the immersion test is defined as a solid-solid distance after the immersion test at the center between the spacers in the immersed portion. The wetting height h after the test is defined as the difference between the surface height of the evaluation liquid and the liquid surface height on the center line between the spacers in the immersed portion in the direction perpendicular to the liquid surface. In addition, the estimated wetting contact angle $\theta_{\text{after correction}}$ after correction can also be obtained by substituting the wetting height $h_{\text{after correction}}$ after correction, the gap width $w_{\text{before test}}$ between the solids before the test, and the distance L between the spacers into formula (7).

According to the method of the present invention, not only is the wetting contact angle at a specific immersion time derived, but also the wet spreading speed at the solid-liquid interfaces of multiple test materials with different immersion times, that is, the change in wetting contact angle over time, can be calculated from changes in the height of the surface of the liquid flowing into the gap between two solids in the test material by intentionally changing the immersion time.

When the surface of the evaluation liquid rises or falls over the immersion time, it is necessary to measure the height of the surface of the evaluation liquid as well as the height of the liquid surface of the evaluation liquid flowing into the gap.

There is no specific method for calculating the wet spreading speed, but the wet spreading speed can be roughly calculated, for example, as described below on the basis of the difference between immersion times 1s and 5s, during which the wetting height changes the most.

(Estimated wetting contact angle $\theta^{1s}_{\text{after correction}}$ - estimated wetting contact angle $\theta^{5s}_{\text{after correction}}$) /4s

The "estimated wetting contact angle $\theta^{1s}_{\text{after correction}}$" refers to the estimated wetting contact angle after correction at an immersion time of 1 s, wherein the estimated wetting contact angle after correction is the angle estimated from formula (7) using the wetting height $h_{\text{after correction}}$ after correction calculated by substituting the measured wetting height h and the gap widths $w_{\text{before test}}$ and $w_{\text{after test}}$ between the solids before and after the immersion test into formula (1).

EXAMPLES

Molten zinc containing 0.2 mass% Al at 460°C was used as an evaluation liquid, and pure iron sheets were used as solids. In addition, solids prepared by depositing $SiO_2$ or MnO on pure iron sheets by PVD to form a film with an average thickness of 1 $\mu$m were also used. SUS304 sheets were used as spacers. Two solids with the same shape were used in the test material, and after drilling holes through the solids and the spacers, the solids and the spacers were fixed with bolt screws. The test material illustrated in Fig. 1 was prepared by using these solids, and after recrystallization annealing at 700°C, the test material was cooled to 460°C. The entire evaluation device was placed in a sealed device in which the atmosphere above the molten zinc bath was controlled at 10% $H_2$ with the balance being $N_2$ and incidental impurities to prevent or reduce the oxidation of the molten zinc bath and the solids. In this state, the test material was immersed in the molten zinc bath for 1 second to 60 seconds. After immersion, the spacers of the test material were cut with a micro-cutter, the height to which the molten zinc had wetted up was then visually measured, and the difference between the wetting-up height and the bath surface was calculated as a wetting height. The wetting height was measured on the center line of the immersed portion of the solids, which was farthest from the spacers, in the direction perpendicular to the liquid surface.

The wetting height corresponds to the difference h in height between the surface of the evaluation liquid and the liquid surface of the evaluation liquid flowing into the gap in Fig. 4. When the wetting-up height was lower than the bath surface at this time, the wetting height was calculated as a negative value.

The gap width between two solids in the test material was from 0.2 mm to 1.2 mm, and the gap width after the immersion test was also measured for the gap width between the solids at the center between the spacers.

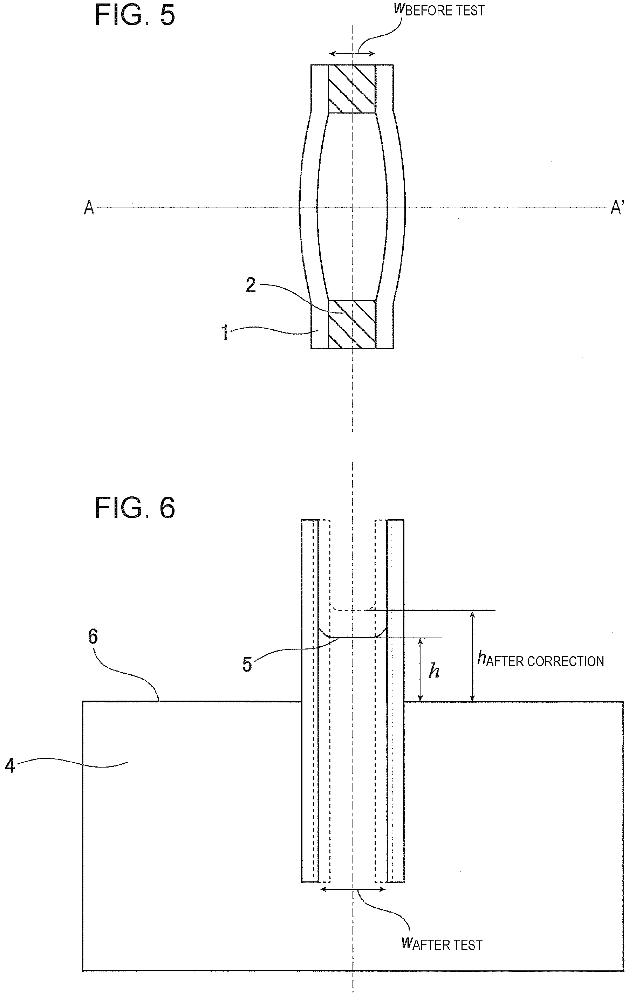

When the solids changed in shape with heating or cooling as illustrated in Fig. 5, the wetting height was corrected by using formula (1). The results are shown in Table 1.

[Table 1]

| No | Solid | Gap Width w (mm) Between Two Solids in Test Material | Immersion Time (sec) | Wetting Height h (mm) | Estimated Wetting Contact Angle θ (°) | Gap Width $W_{after\ test}$ (mm) Between Solids After Immersion Test | Wetting Height $h_{after\ correction}$ (mm) After Correction | Estimated Wetting Contact Angle $θ_{after\ correction}$ (°) After Correction | Wet Spreading Speed (°/s) | Note |
|---|---|---|---|---|---|---|---|---|---|---|
| 1 | pure iron | 0.80 | 1 | 10.0 | 69.5 | 0.81 | 10.1 | 69.3 | 9.1 | |
| 2 | pure iron | 0.80 | 5 | 24.0 | 32.9 | 0.80 | 24.0 | 32.9 | - | reference value |
| 3 | pure iron | 0.80 | 60 | 32.5 | - | 0.81 | 32.9 | - | - | reference value |
| 4 | pure iron + $SiO_2$ | 0.40 | 1 | -51.0 | 153.1 | 0.40 | -51.0 | 153.1 | 0.2 | |
| 5 | pure iron + $SiO_2$ | 0.80 | 1 | -25.5 | 153.1 | 0.80 | -25.5 | 153.1 | - | reference value |
| 6 | pure iron + $SiO_2$ | 0.80 | 5 | -25.0 | 151.0 | 0.81 | -25.3 | 152.3 | - | reference value |
| 7 | pure iron + $SiO_2$ | 0.80 | 60 | -25.0 | 151.0 | 0.79 | -24.7 | 149.7 | - | |
| 8 | pure iron + $SiO_2$ | 1.20 | 1 | -16.5 | 150.0 | 1.23 | -16.9 | 152.5 | 1.8 | |
| 9 | pure iron + MnO | 0.80 | 1 | -23.5 | 145.3 | 0.79 | -23.2 | 144.3 | - | |
| 10 | pure iron + MnO | 0.80 | 5 | -21.5 | 138.8 | 0.78 | -21.0 | 137.2 | - | reference value |
| 11 | pure iron + MnO | 0.80 | 60 | -19.0 | 131.6 | 0.81 | -19.2 | 132.3 | - | reference value |

In Table 1, the results at an immersion time of 1 second correspond to the evaluation results of the initial wetting. The estimated wetting contact angle corresponds to the result calculated from the gap width and the wetting height. This calculation was performed by using the surface tension $\gamma$ of molten zinc at 460°C: 0.77 N/m, zinc density $\rho$: 6.570 g/cm$^3$, and gravitational acceleration g: 9.8 m/sec$^2$.

Regarding the initial wetting of each solid, pure iron has very good wettability, but the SiO$_2$/MnO-deposited solids have poor wettability and a large estimated contact angle. Regarding the wettability of such an oxide by molten zinc, for example, Non Patent Literature 3 reports that the static wetting contact angle of molten zinc on SiO$_2$ and MnO is about 120°. The measurement of the contact angle in the method used in this study, however, has found that the contact angle assumed in the actual process is even larger than the contact angle reported in Non Patent Literature 3.

In addition, when the immersion time was 5 seconds or longer, the wetting height increased for pure iron and the MnO-deposited solids. This is because in an alloying reaction system, such as that involving molten zinc and pure iron, the iron-zinc alloying reaction proceeds over time so that the wetting height (wet spreading) increases. The contact angle calculated from this wetting height thus corresponds to a value resulting from a mixture of initial wetting and wet spreading and is described only as a reference value.

The SiO$_2$-deposited solids showed almost no change in wetting height with the immersion time. This suggests that the Fe-Zn alloying reaction rate on the SiO$_2$-deposited solids is much lower than that on the other two types of solids.

There was no specific method for roughly calculating the wet spreading speed, but the wet spreading speed was roughly calculated as described below on the basis of the difference between immersion times 1s and 5s, during which the wetting height changed the most.

$$\text{Wet spreading speed} = (\text{estimated wetting contact angle } \theta^{1s}_{\text{after correction}} - \text{estimated wetting contact angle } \theta^{5s}_{\text{after correction}}) / 4s \quad (9)$$

As described above, by using the present invention, the wettability of a solid surface by a given liquid can be more simply obtained as a numerical value, and the wet spreading behavior can be quantitively compared and evaluated. When the solids change in shape with heating or cooling, the wettability of the solid surface can be more simply obtained as a numerical value by correcting the surface height of the evaluation liquid on the basis of the change in the gap width between the solids. In addition, the wettability of a solid surface by a liquid under a specific environmental atmosphere can also be measured. In particular, the present invention can evaluate the wettability of a solid surface by a coating bath liquid under conditions assumed in the actual operation of hot-dip galvanization widely used in industry. Reference Signs List

1 Solid
2 Spacer
3 Gap width
4 Evaluation liquid
5 Flow-in liquid surface
6 Evaluation liquid surface
F Force in vertical direction
$\gamma$ Surface tension
l Perimeter of solid
V Volume of immersed portion
$\theta$ Contact angle
h Height of flow-in liquid surface from evaluation liquid surface
w Gap width
$h_{\text{after correction}}$ Wetting height after correction
$w_{\text{before test}}$ Gap width before immersion test
$w_{\text{after test}}$ Gap width after immersion test

**Claims**

1. A solid surface wettability evaluation method comprising:

performing an immersion test in which a test material is prepared by placing two solids opposite to each other such that evaluation target surfaces of the solids are separated from each other and entire lower ends of the two solids are present on a same plane, and the test material is immersed in an evaluation liquid such that an entire lower end of the test material is parallel to a surface of the evaluation liquid;

measuring, as a wetting height, a difference between a height of the surface of the evaluation liquid and a height of a liquid surface of the evaluation liquid flowing into a gap between the two solids at a predetermined immersion time; and

using the measured value as a value for evaluating wettability of surfaces of the solids by the evaluation liquid.

2. The solid surface wettability evaluation method according to Claim 1, wherein a contact angle of the evaluation liquid with the solids is calculated on the basis of the wetting height and a gap width between the solids, and the contact angle is used as a value for evaluating the wettability of the surfaces of the solids by the evaluation liquid.

3. The solid surface wettability evaluation method according to Claim 1 or 2, wherein a gap width $w_{after\ test}$ between the solids after the immersion test is measured, the wetting height $h$ is corrected by using formula (1) below on the basis of the gap width $w_{after\ test}$ and a gap width $w_{before\ test}$ between the solids before the immersion test, and a wetting height $h_{after\ correction}$ after the correction is used as a value for evaluating the wettability of the surfaces of the solids by the evaluation liquid.

$$h_{after\ correction} = (h \cdot w_{after\ test})/w_{before\ test} \quad (1)$$

4. The solid surface wettability evaluation method according to Claim 3, wherein the contact angle of the evaluation liquid with the solids is calculated from the wetting height $h_{after\ correction}$ after the correction and the gap width $w_{after\ test}$ between the solids after the immersion test, and the contact angle is used as a value for evaluating the wettability of the surfaces of the solids by the evaluation liquid.

5. The solid surface wettability evaluation method according to any one of Claims 1, 2, 3 and 4, wherein a wet spreading speed at a solid-liquid interface is calculated from a change in the height of the liquid surface of the evaluation liquid flowing into the gap between the solids when the immersion time is changed in the immersion test.

6. The solid surface wettability evaluation method according to any one of Claims 1, 2, 3, 4 and 5, wherein an atmosphere above the surface of the evaluation liquid during immersion or before immersion in the immersion test is controlled.

7. The solid surface wettability evaluation method according to Claim 6, wherein the evaluation liquid is a molten metal.

8. The solid surface wettability evaluation method according to Claim 7, wherein the evaluation liquid is a molten zinc.

# EP 4 549 908 A1

## FIG. 1

1. SOLID
2. SPACER
3. GAP WIDTH

## FIG. 2

1. SOLID
4. EVALUATION LIQUID
5. HEIGHT OF FLOW-IN LIQUID
6. EVALUATION LIQUID SURFACE

12

# FIG. 3

# FIG. 4

## FIG. 5

## FIG. 6

## FIG. 7

## FIG. 8

## INTERNATIONAL SEARCH REPORT

| International application No. |
| --- |
| **PCT/JP2023/032209** |

**A.    CLASSIFICATION OF SUBJECT MATTER**

*G01N 13/00*(2006.01)i
   FI:   G01N13/00

According to International Patent Classification (IPC) or to both national classification and IPC

**B.    FIELDS SEARCHED**

Minimum documentation searched (classification system followed by classification symbols)
   G01N13/00

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | Microfilm of the specification and drawings annexed to the request of Japanese Utility Model Application No. 59733/1989 (Laid-open No. 150550/1990) (NIHON ALMIT CO., LTD.) 26 December 1990 (1990-12-26), p. 1, line 3 to p. 4, line 6, fig. 1-3 | 1, 7 |
| Y | | 2, 5-6, 8 |
| A | | 3-4 |
| Y | JP 6-148056 A (ALPS ELECTRIC CO., LTD.) 27 May 1994 (1994-05-27) paragraph [0003], fig. 7 | 2, 5-6, 8 |
| Y | JP 8-68742 A (RESEARCH DEVELOPMENT CORPORATION OF JAPAN) 12 March 1996 (1996-03-12) paragraphs [0001]-[0043], fig. 1-6 | 2, 5-6, 8 |
| Y | JP 53-137054 A (MITSUBISHI ELECTRIC CORP.) 30 November 1978 (1978-11-30) p. 1, left column, line 3 to p. 3, upper left column, line 16, fig. 1-4 | 5-6, 8 |
| Y | JP 6-207900 A (MARCOM KK) 26 July 1994 (1994-07-26) paragraphs [0001]-[0080], fig. 1-9 | 5-6, 8 |

☑ Further documents are listed in the continuation of Box C.          ☑ See patent family annex.

| | | | |
| --- | --- | --- | --- |
| *   | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 September 2023** | **10 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2023/032209** |

**C.    DOCUMENTS CONSIDERED TO BE RELEVANT**

| Category* | Citation of document, with indication, where appropriate, of the relevant passages | Relevant to claim No. |
|---|---|---|
| A | JP 8-128993 A (MARKTEC CORP.) 21 May 1996 (1996-05-21)<br>entire text, all drawings | 1-8 |
| A | JP 2017-219388 A (IDEMITSU KOSAN CO., LTD.) 14 December 2017 (2017-12-14)<br>entire text, all drawings | 1-8 |
| A | US 5001923 A (SCHMITT-THOMAS; KARLHEINZ G.) 26 March 1991 (1991-03-26)<br>entire text, all drawings | 1-8 |
| A | CN 113188957 A (LISHEN POWER BATTERY SYSTEMS CO., LTD.) 30 July 2021<br>(2021-07-30)<br>entire text, all drawings | 1-8 |
| A | CN 112710588 A (CHONGQING UNIVERSITY) 27 April 2021 (2021-04-27)<br>entire text, all drawings | 1-8 |

Form PCT/ISA/210 (second sheet) (January 2015)

**INTERNATIONAL SEARCH REPORT**
Information on patent family members

International application No.

**PCT/JP2023/032209**

| Patent document cited in search report | | | Publication date (day/month/year) | Patent family member(s) | Publication date (day/month/year) |
|---|---|---|---|---|---|
| JP | 2-150550 | U1 | 26 December 1990 | (Family: none) | |
| JP | 6-148056 | A | 27 May 1994 | (Family: none) | |
| JP | 8-68742 | A | 12 March 1996 | (Family: none) | |
| JP | 53-137054 | A | 30 November 1978 | (Family: none) | |
| JP | 6-207900 | A | 26 July 1994 | (Family: none) | |
| JP | 8-128993 | A | 21 May 1996 | (Family: none) | |
| JP | 2017-219388 | A | 14 December 2017 | (Family: none) | |
| US | 5001923 | A | 26 March 1991 | EP 377818 A2 entire text, all drawings | |
| CN | 113188957 | A | 30 July 2021 | (Family: none) | |
| CN | 112710588 | A | 27 April 2021 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6148056 A

**Non-patent literature cited in the description**

- **SYU ONO**. Surface Tension. *Kyoritsu Shuppan*, 1980, 82
- **SADAYUKI TOMA**. Evaluation of Solderability by Meniscograph. *Journal of the Surface Finishing Society of Japan*, 2012, vol. 63 (11), 660
- **YUNKYUM KIM**. Wettability of MnxSiyOz by Liquid Zn-Al Alloys. *METALLURGICAL MATERIALS TRANSACTIONS B*, 2010, vol. 14, 872